# EUROPÄISCHE PATENTSCHRIFT

(11) **EP 2 307 315 B1**
(45) Veröffentlichungstag und Bekanntmachung des Hinweises auf die Patenterteilung: **21.12.2016**
(21) Anmeldenummer: 09722063.6
(22) Anmeldetag: 27.02.2009
(51) Int. Cl.: C01F 7/02, C01F 7/42, C01F 7/44, C04B 14/30, C04B 18/14, C04B 7/147, C22B 21/00, C22B 7/04

(54) **HOCHTONERDEHALTIGER ROHSTOFF UND VERFAHREN ZU SEINER HERSTELLUNG**
RAW MATERIAL HAVING A HIGH ALUMINA CONTENT AND METHOD FOR ITS MANUFACTURE
MATIÈRE PREMIÈRE À FORTE TENEUR EN ALUMINE ET SON PROCÉDÉ DE FABRICATION

(30) Priorität: 20.03.2008 EP 08005328
(43) Veröffentlichungstag der Anmeldung: 13.04.2011
(73) Patentinhaber: Befesa Salzschlacke GmbH, 30179 Hannover (DE)
(72) Erfinder: MERKER, Gerhard, 58239 Schwerte (DE); FEIGE, Reinhard, 58332 Schwelm (DE); STEYER, Jürgen, 37085 Göttingen (DE)
(74) Vertreter: Flaccus, Rolf-Dieter
(86) Internationale Anmeldenummer: PCT/EP2009/001438
(87) Internationale Veröffentlichungsnummer: WO 2009/115177

(56) Entgegenhaltungen:
- EP-A- 0 881 200
- EP-A- 1 140 937
- EP-A- 1 180 504
- EP-B1- 2 105 412
- WO-A-93/06254
- DE-A1- 4 432 299
- EL-KATATNY E A ET AL: "RECOVERY OF HIGH SURFACE AREA ALUMINA FROM ALUMINIUM DROSS TAILINGS" JOURNAL OF CHEMICAL TECHNOLOGY AND BIOTECHNOLOGY, BLACKWELL SCIENTIFIC PUBLICATIONS. OXFORD, GB, Bd. 75, Nr. 5, 1. Mai 2000 (2000-05-01), Seiten 394-402, XP001006411 ISSN: 0268-2575

## Beschreibung

Die Erfindung betrifft einen hochtonerdehaltigen Rohstoff mit großer Reaktionsfähigkeit, gekennzeichnet durch eine große spezifische Oberfläche, vorwiegend für eine Verwendung in Verbindung mit mineralischen Bindemittelbaustoffen (wie Zement, Wasserglas, alkali-aktivierten Bindemitteln, Geopolymeren) als Füllstoff und erstarrungs- und erhärtungsbeeinflussende Bindemittelkomponente (gegebenenfalls in Kombination mit erstarrungs- und erhärtungsbeschleunigenden Zementzusätzen, wie z.B. Soda oder Aluminiumsulfat), auch für eine Verwendung als reaktiver Al₂O₃-Träger für gesinterte und geschmolzene Produkte (wie Zementklinker, keramische und feuerfeste Werkstoffe, Mineralwolle, Glas und Glasfasern), sowie zur Adsorption von Flüssigkeiten und Gasen. Ferner betrifft die Erfindung ein Verfahren zur Herstellung dieses hochtonerdehaltigen, reaktiven Rohstoffs durch Aufbereitung von Aluminium-Salzschlacken.

Aluminium-Salzschlacken entstehen bei der Rückgewinnung von Aluminium durch Einschmelzen von Aluminium-Schrotten und Aluminium-Krätzen. Da beim Schmelzen von Aluminium an Luft die Oberfläche der Schmelze mit dem Sauerstoff der Luft und - zu einem geringen Anteil - auch mit dem Stickstoff der Luft reagiert, bilden sich Aluminiumoxid und Aluminiumnitrid:

4Al + 3O₂ →2 Al₂O₃

2Al + N₂ → 2 AIN

Bei magnesiumhaltigen Aluminium-Legierungen entsteht zusätzlich Spinell:

Mg + 2Al + 2O₂ → MgAl₂O₄

Die nichtmetallischen Reaktionsprodukte Al₂O₃, MgAl₂O₄ und AIN bilden auf der Oberfläche der Metallschmelze eine so genannte Krätze, in die bis zu 70 % Metall eingebunden sein kann. Aufgrund der hohen Feinheit der Metallpartikel kann Krätze sich selbst entzünden, ist somit ein Gefahrstoff.

Zur Rückgewinnung von Aluminium aus Recycling-Metall und zur Aufarbeitung von Krätze wird in der Regel ein Schmelzverfahren angewandt, bei dem Schrott und Krätze unter einer Abdeckung aus Salz (z.B. ein Gemisch aus 70 % NaCl, 28 % KCl und 2 % CaF₂) eingeschmolzen werden. Aus Krätze lässt sich dadurch ein erheblicher Anteil an Aluminium zurückgewinnen. Die Salzabdeckung behindert die Bildung von Aluminiumoxid und Aluminiumnitrid erheblich. Außerdem wirkt das Salz benetzend auf die nichtmetallischen, oxidischen Partikel. Das zwischen diesen Partikeln befindliche Metall wird dabei durch das Salz verdrängt und es entsteht eine metallarme Schlacke, die Salzschlacke. Da die Salzschlacke eine geringere Dichte hat als das flüssige Aluminium und somit auf der Metallschmelze schwimmt, können das Aluminium und die Salzschlacke getrennt abgegossen werden. Im Unterschied zu einer Krätze enthält eine Salzschlacke typischerweise zwischen 20 und 60 % Salze (hauptsächlich NaCl und KCl,), zwischen 35 und 75 % Oxide (hauptsächlich Al₂O₃, MgO, SiO₂) und immerhin auch noch jeweils bis zu ca. 15 % metallisches Aluminium und Aluminiumnitrid. Pro Tonne Sekundäraluminium fallen (in Abhängigkeit vom Verschmutzungsgrad der eingesetzten Aluminiumschrotte) etwa 0,5 bis 0,7 t Salzschlacke an.

Da eine Deponierung von Salzschlacke problematisch für die Umwelt und in einigen Ländern sogar verboten ist, wird die Salzschlacke einem Aufbereitungsprozess unterworfen mit dem nach dem Stand der Technik vorrangigen Ziel der Rückgewinnung von möglichst hohen Anteilen an Aluminium und Schmelzsalz sowie der Abtrennung eines verwertbaren oder unbedenklich deponierbaren oxidhaltigen Materials. Dies gelingt dadurch, dass die Salzschlacke mehrstufig auf eine Korngröße kleiner 1 mm zerkleinert wird, wonach sich ein großer Teil des metallischen Aluminiums mechanisch durch Siebung abtrennen lässt. Durch Behandlung der Salzschlacke mit Wasser während oder nach der Zerkleinerung wird das Schmelsalz (NaCl und KCl) in Lösung gebracht. Nach Abtrennung der nicht gelösten oxidischen Bestandteile von der Lösung durch Filtration wird eine Salzsole erzeugt, aus der durch Eindampfen wieder verwendbares Schmelzsalz auskristallisiert wird.

Der mittels Filtration abgetrennte, die oxidischen Bestandteile enthaltende Filterkuchen enthält typisch (bezogen auf getrocknete Substanz)

| | |
|---|---|
| Al₂O₃ | 50 - 90 Gew.-% |
| MgO | 1 - 20 Gew.-% |
| SiO₂ | 0,5-15 Gew.-% |
| AIN | 0,1 - 15 Gew.-% |
| Fe₂O₃ | 0,1-5 Gew.-% |
| CaO | 0,1-7 Gew.-% |
| F | 0,1 - 10 Gew.-% |
| Na₂O | 0,1-6 Gew.-% |
| K₂O | 0,1-2 Gew.-% |
| Al-Metall | 0,1 - 10 Gew.-% |
| Si-Metall | 0,1-3 Gew.-% |
| Fe-Metall | 0,1-3 Gew.-% |
| Glühverlust | 0,1-15 Gew.-% |
| Rest | max. 5 Gew.-% |

sowie eine Feuchte bis max. 50 Gew,-%.

Er besteht aus den folgenden mineralischen Hauptbestandteilen
- Bayerit (Al₂O₃·3H₂O) und Böhmit (Al₂O₃·H₂0)
- Korund (Al₂O₃)
- Spinell (MgO. Al₂O₃).

Das Aluminiumhydroxid entsteht durch Hydrolyse von metallischem Aluminium und Aluminiumnitrid mit dem Prozesswasser unter Freisetzung von Wasserstoff und Ammoniak:

2Al + 6H₂O →2Al (OH)₃ + 3H₂

AIN + 3H₂O → Al(OH)₃ + NH₃

Da die Reaktion von der Mahlfeinheit, dem pH-Wert und der Zeit abhängt, verläuft sie unter üblichen Verfahrensbedingungen meist unvollständig.
US 5,198,200 beschreibt ein Verfahren zu Rückgewinnung von metallischem Aluminium, Salzgemischen und einem Aluminiumoxid-Aluminiummetall-Produkt aus Aluminiumkrätze, wobei diese Krätze mit Wasser gelaugt wird. Der pH-Wert wird dabei durch Zugabe von Magnesiumchlorid im Bereich 7 - 8,5 eingestellt, um die Freisetzung von Ammoniak zu verringern und die Rückgewinnung von Aluminiummetall fördern.

US 6,110,434 beinhaltet ein Lösungsverfahren mit Säuren zur Gewinnung von Aluminiumhydroxid, Magnesiumhydroxid und Magnesiumaluminatspinell aus Aluminium-Krätze, wobei die Krätze zunächst durch Lösen mit Wasser in ein nichtmetallisches Produkt (NMP) mit einem Al₂O₃-Gehalt von etwa 40 bis 75 Gew.-% umgewandelt wird, bei einem pH-Wert von kleiner 8, um die unerwünschte Bildung von Ammoniak und Wasserstoff zu minimieren (Spalte 3, Zeilen 60 - 67). Das beschriebene NMP enthält amorphes Material, vermutlich Aluminiumhydroxid (Spalte 6, Zeilen 51 - 59), und wird als Filterkuchen mit bis zu 50 Gew.-% H₂O (Spalte 6, Zeilen 31 - 33) abgetrennt.

Gemäß WO 95/21138 wird durch Aufbereitung von Aluminium-Krätze, die Schmelzsalze enthält, ein nichtmetallisches Produkt (NMP) mit einem Al₂O₃-Gehalt von 25 bis 75 Gew.-% Al₂O₃ gewonnen, das unter Zugabe alkalischer Materialien (Natriumhydroxid, Calciumhydroxid, Borax und Soda-Asche) in eine Suspension gebracht wird, die zur Herstellung keramischer Produkte verwendet wird.

Aus DE 43 19 163 C2 und DE 43 45 368 C2 ist ein hochtonerdehaltiger Reststoff aus der Aufarbeitung von Aluminium-Salzschlacke bekannt, welcher bezogen auf getrocknete Substanz einen Al₂O₃-Gehalt von 55 bis 70% hat, mit Korund (Al₂O₃) und Spinell (MgO. Al₂O₃) als kristallinen Hauptbestandteilen. Als Teilchengröße wird angeben: <200 µm ca. 90 Gew.-%, Primärpartikel <5 µm. Dieser Reststoff wird nach DE 43 19 163 C2 als Füllstoff in zementgebundenen Baustoffen verwendet, und gemäß DE 43 45 368 C2 als Al₂O₃-Rohstoff in Mischung mit CaO-haltigen Rohstoffen zum Sintern oder Schmelzen von Aluminatzementklinker.
EP 1 180 504 B1 beschreibt einen Bindemittelbaustoff-Zusatz mit porosierender und erstarrungsbeschleunigender Wirkung, bestehend aus 50 - 90 % Al₂O₃, Al-Metall (0,1 - 10 %) und mineralischen Hauptbestandteilen in Form von Korund und Spinell, wobei die metallischen AI-Teilchen von thermischen Übergangsmodifikationen von Al-Hydroxid zu Al-Oxid umhüllt sind, das Pulver eine Teilchengröße von mindestens 90 % kleiner 500 µm aufweist und die spezifische BET-Oberfläche bis zu 50 m²/g beträgt. Zur Herstellung dieses Bindemittelbaustoff-Zusatzes wird der durch Aufarbeitung von Aluminum-Salzschlacken erhaltene hochtonerdehaltige Reststoff getrocknet und kalziniert. Nach Trocknung in einem Rauchgasstrom bei 400 bis 500°C und einer Verweilzeit von weniger als 10 Sekunden wird eine spezifische BET-Oberfläche von 27 m²/g erhalten (Seite 4, Beispiel 2), die bei einer Kalzination im Temperaturbereich von 400 bis 1000 °C einen Maximalwert von 45 m²/g bei 750°C erreicht (Seite 4, Beispiel 3).

Aus EP 1 440 937 B1 ist ein hochtonerdehaltiger Rohstoff bekannt mit einem Aluminiumoxid-Gehalt von 50 - 80 % und den mineralischen Hauptbestandteilen Aluminiumhydroxid, Korund und Spinell, wobei das Al-Hydroxid als Al-Monohydroxid und Al-Trihydroxid vorliegt. Der Rohstoff wird als sinteraktiver Tonerdeträger für die Herstellung von keramischen und feuerfesten Produkten, Zement, porosierten Bindemittelbaustoffen, Schlackenbildnern für die Eisen- und Stahlerzeugung, Mineralwolle und keramischen Fasern verwendet, und dadurch hergestellt, dass ein hochtonerdehaltiger Reststoff aus der Aufbereitung von Aluminium-Salzschlacken mechanisch verdichtet und unter feuchtwarmen bis hydrothermalen Bedingungen behandelt wird.

Aufgabe der vorliegenden Erfindung ist es, durch Aufbereitung von Aluminium-Salzschlacke neue bzw. verbesserte hochtonerdehaltige Rohstoffe zu gewinnen und somit den Bereich der Einsatzmöglichkeiten dieser Rohstoffe zu erweitern, den Anfall von Reststoffen zu vermeiden, und besonders, den Vorrat an natürlichen Rohstoffen zu schonen. So sind beispielsweise für eine Verwendung in Verbindung mit mineralischen Bindemittelbaustoffen (wie Zement, Wasserglas, alkali-aktivierte Bindemittel, Geopolymere) als Füllstoff und erstarrungs- und erhärtungsbeeinflussende Bindemittelkomponente (gegebenenfalls in Kombination mit erstarrungs- und erhärtungsbeschleunigenden Zementzusätzen, wie z.B. Soda oder Aluminiumsulfat), auch bei einer Verwendung als Al₂O₃-Träger für gesinterte und geschmolzene Produkte (wie Zementklinker, keramische und feuerfeste Werkstoffe, Mineralwolle, Glas und Glasfasern) Rohstoffe mit großer spezifischer Oberfläche (und damit großer Reaktivität) erwünscht. Rohstoffe mit einer großen spezifischen Oberfläche können auch zur Adsorption von Flüssigkeiten und Gasen genutzt werden.

Diese Aufgabe wird erfindungsgemäß dadurch gelöst, dass - im Unterschied zum Stand der Technik, nach dem nur Rohstoffe bekannt sind, die dadurch gewonnen werden, dass das oxidische Material bzw. der Reststoff aus der Aufarbeitung von Aluminiumsalzschlacke auf verschiedene Weise separat weiterbehandelt wird - bereits der eigentliche Prozess der Aufbereitung von Aluminiumsalzschlacke so gesteuert wird, dass ein hochtonerdehaltiger Rohstoff mit möglichst großer Reaktivität gebildet wird, indem
a) eine Aluminiumsalzschlacke, enthaltend 20 bis 60 Gew.-% Salze (hauptsächlich NaCl, KCl, CaF₂), 35 bis 75 Gew.-% Oxide (hauptsächlich Al₂O₃, MgO, SiO₂), und jeweils bis zu 15 Gew.-% Al-Metall und Aluminiumnitrid mittels geeigneter Zerkleinerungsgeräte (bevorzugt eines Backenbrechers und einer Prallmühle) vorzerkleinert und anschließend in einem geeigneten Mahlaggregat (bevorzugt einer Trommelmühle mit Eisenkugeln) unter Zugabe von Wasser, bei einem Feststoffgehalt von 25 bis 55 Gew.-%, auf eine Teilchengröße von mindestens 90 Gew.-% kleiner 500 µm, bei einem mittleren Teilchendurchmesser (d50) von kleiner als 50 µm gemahlen wird,
b) die Mahlsuspension zum möglichst vollständigen Lösen der Salzbestandteile und zur Bildung von Aluminiumhydroxid (aus der Reaktion von Al-Metall und Al-Nitrid mit Wasser, unter Freisetzung von gasförmigem Wasserstoff und Ammoniak und Bildung einer ammoniakalischen Salzsole) in einem Rührreaktor konditioniert wird, bei einem pH-Wert zwischen 9 und 12, einer Temperatur zwischen 30 und 90°C und einer Verweilzeit zwischen 10 und 60 min,
c) die konditionierte Suspension zum Abtrennen der ungelösten Bestandteile von der Salzsole mittels eines geeigneten Filters (bevorzugt eines Vakuum-Bandfilters) filtriert wird, wobei zunächst der Filterkuchen durch Spülen und Aufsprühen von Wasser möglichst salzfrei gewaschen und am Ende der Filtration Luft durch den Filterkuchen gesaugt wird, wodurch der Feuchtegehalt des Filterkuchens auf 30 bis 50 Gew.-% reduziert wird, und schließlich
d) der Filterkuchen direkt oder auch nach einer Zwischenlagerung mittels eines geeigneten Trockners (vorzugsweise eines Trommeltrockners) bei einer Guttemperatur von 70 bis maximal 110°C auf eine Restfeuchte von bevorzugt kleiner 10 Gew.-% getrocknet wird,
und dadurch ein hochtonerdehaltiger Rohstoff gewonnen wird, der eine spezifische Oberfläche von mehr als 50 m²/g und einen mittleren Porendurchmesser von weniger als 100 A aufweist.

Eine gezielte Steuerung der Produkteigenschaften (insbesondere der spezifischen Oberfläche) des hochtonerdehaltigen Rohstoffs kann dadurch erfolgen, dass beim Waschen des Filterkuches darauf geachtet wird, dass ein pH-Wert von 8 bis 9 nicht unterschritten wird, beziehungsweise auf dem Bandfilter Ammoniak, Natronlauge oder Branntkalk zugegeben werden, um den pH-Wert auf dem gesamten Bandfilter bei größer 9 zu halten.

Der erfindungsgemäße hochtonerdehaltige Rohstoff enthält - chemisch ähnlich wie ein oxidischer Reststoff aus der Aufbereitung von Aluminium-Salzschlacke - (bezogen auf Trockensubstanz)

| | |
|---|---|
| Al₂O₃ | 50 - 90 Gew.-% |
| MgO | 1 - 20 Gew.-% |
| SiO₂ | 0,5 - 15 Gew.-% |
| AIN | 0,1-15 Gew.-% |
| Fe₂O₃ | 0,1-5 Gew.-% |
| CaO | 0,1-7 Gew.-% |
| F | 0,1 - 10 Gew.-% |
| Na₂O | 0,1-6 Gew.-% |
| K₂O | 0,1-2 Gew.-% |
| Al-Metall | 0,1 - 10 Gew.-% |
| Si-Metall | 0,1-3 Gew.-% |
| Fe-Metall | 0,1-3 Gew.-% |
| Glühverlust | 0,1-15 Gew.-% |
| Rest | max. 5 Gew.-% |

mit den mineralischen Hauptbestandteilen
- Bayerit (Al₂O₃·3H₂O) und Böhmit (Al₂O₃·H₂O)
- Korund (Al₂O₃)
- Spinell (MgO. Al₂O₃)
und hat eine Teilchengröße von mindestens 90 Gew.-% kleiner 500 µm.

Im Unterschied zu den bisher bekannten hochtonerdehaltigen Rohstoffen und oxidischen Reststoffen, die durch Aufbereitung von Aluminium-Salzschlacke und Krätze gewonnen werden, hat der erfindungsgemäße Rohstoff eine spezifische Oberfläche von mehr als 50 m²/g und einen mittleren Porendurchmesser von weniger als 100 A. Infolge dieser Eigenschaften ist der erfindungsgemäße Rohstoff sehr reaktiv. Zur Charakterisierung der Reaktivität z.B. für eine Verwendung in mineralischen Bindemittelbaustoffen in Verbindung mit Wasser (wie Zement, Wasserglas, alkali-aktivierten Bindemitteln, Geopolymeren), als Füllstoff und erstarrungs- und erhärtungsbeeinflussende Bindemittelkomponente (gegebenenfalls in Kombination mit erstarrungs- und erhärtungsbeschleunigenden Zementzusätzen, wie z.B. Soda oder Aluminiumsulfat) kann - in Anlehnung an die Bestimmung des Verarbeitungsverhaltens von Gips mit Wasser - die sogenannte Einstreumenge gemessen werden, d.h. die Menge an Rohstoff, die beim Einstreuen in 100 ml Wasser noch befeuchtet wird.

Die nachfolgenden Beispiele veranschaulichen den Gegenstand der Erfindung.

### Beispiel 1 (Stand der Technik)

Gemäß EP 1 180 504 B1, Seite 4, Beispiele 1 bis 3, wird ein oxidischer Reststoff aus der Aufbereitung von Aluminiumsalzschlacke mit einem Gehalt an Aluminiumoxid von 64 %, den mineralischen Hauptkomponenten Korund, Spinell und Aluminiumhydroxid, einem Aluminium-Metallgehalt von 3 %, einem Glühverlust von 11%, einer Feuchte von 25 % und einer Teilchengröße von 90 % kleiner 500 µm mittels eines gasbeheizten Stromtrockners (Rauchgastemperatur ca. 450°C, Ablufttemperatur ca. 150°C, Verweilzeit weniger als 10 Sekunden) getrocknet und thermisch teilaktiviert.
Das Pulver (Bezeichnung: SEROX T) hat eine Restfeuchte von 0,8 %, einen Glühverlust von 10 %, einen Gehalt an metallischem Aluminium von 3 %, thermische Übergangsmodifikationen von Aluminiumhydroxid Al(OH)₃ zu α-Aluminiumoxid (Korund) in Form von AIOOH (Böhmit) und eine spezifische BET-Oberfläche von 27 m²_{/}g.

Das Pulver SEROX-T wird anschließend mittels eines gasbeheizten Hochtemperatur-Mischzyklons bei Rauchgastemperaturen von 600, 750, 900 und 1200°C kalziniert (Bezeichnung: SEROX-TK), wobei eine maximale spezifische Oberfläche von 45 m²/g erreicht wird:

| Produkt | Temperatur [°C] | BET-Oberfläche [m²/g] | Porenverteilung [nm] | Al-Metall [Gew.-%] |
|---|---|---|---|---|
| SEROX-T | 150 | 27 | keine Angabe | 3 |
| SEROX-TK600 | 600 | 36 | 20 - 200 | 3 |
| SEROX-TK750 | 750 | 45 | 20-200 | 3 |
| SEROX-TK900 | 900 | 26 | 20-200 | 2,5 |
| SEROX-TK1200 | 1200 | 5 | - | 1 |

Die Bestimmung der Einstreumenge ergibt folgende Werte:

| Probe | Einstreumenge [g/100ml Wasser] |
|---|---|
| SEROX-T | 240 |
| SEROX-TK 600 | 330 |
| SEROX-TK 750 | 300 |
| SEROX-TK 900 | 270 |
| SEROX-TK 1200 | 260 |

### Beispiel 2

Eine Aluminium-Salzschlacke, enthaltend etwa 40 Gew.-% Salze, etwa 50 Gew.-% Oxide und etwa 10 Gew.-% Al-Metall und Al-Nitrid wird
a) mittels Backenbrecher und Prallmühle auf eine Körnung unter 25 mm vorzerkleinert und anschließend in einer kontinuierlich betriebenen, mit Wasser und Eisenkugeln gefüllten Trommelmühle bei einem Feststoffgehalt von 37 Gew.-%, auf eine Teilchengröße von 99 Gew.-% kleiner 500 µm, bei einem mittleren Teilchendurchmesser (d50) von 15 µm, gemahlen,
b) die Mahlsuspension wird in einem Rührreaktor konditioniert bei einer Temperatur von 70 °C, einem pH-Wert von 9,5 und einer Verweilzeit von 20 min,
c) die konditionierte Suspension wird mittels eines Vakuumbandfilters filtriert, wobei der Filterkuchen durch Spülen und Aufsprühen von Wasser gewaschen wird, bis der pH-Wert auf 8,5 reduziert ist, und am Ende der Filtration Luft durch den Filterkuchen gesaugt wird, wodurch ein Filterkuchen mit einem Feuchtegehalt von 42 Gew.-% gebildet wird,
d) und schließlich der so behandelte Filterkuchen nach einer ca. zweiwöchigen Zwischenlagerung in einem Trommeltrockner bei einer Guttemperatur von 85 °C auf eine Restfeuchte von 7 Gew.-% getrocknet wird.

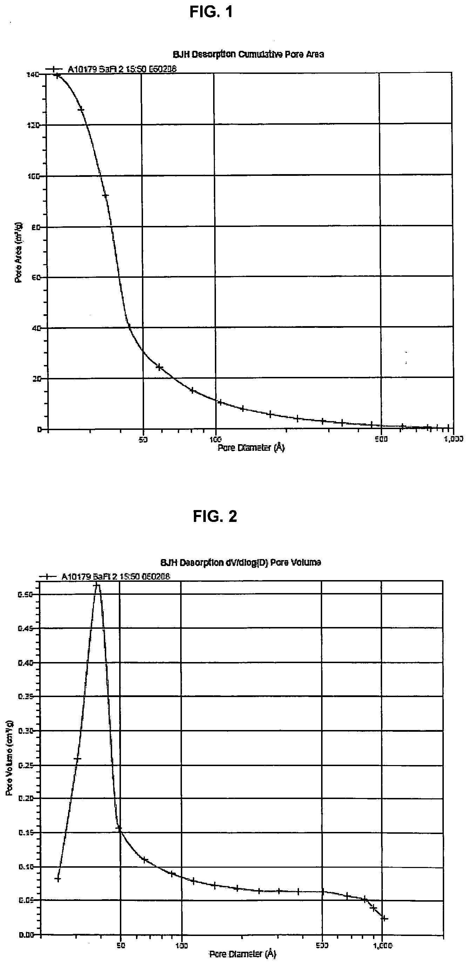

Die spezifische Oberfläche des hochtonerdehaltigen Rohstoffs beträgt, gemessen nach der BET-Methode: 103 m²/g (nach der Langmuir-Methode: 140 m²/g). Der mittlere Porendurchmesser nach BET liegt bei 70 A. Das Porenvolumen hat ein Häufigkeitsmaximum bei einem Porendurchmesser im Bereich von 30 bis 50 Å (siehe Fig. 1 - 2).

Die Einstreumenge in 100 ml Wasser ist 149 g.

Die chemische Analyse (bezogen auf getrocknete Substanz) ergibt:

| | |
|---|---|
| Al₂O₃ | 66,5 Gew.-% |
| MgO | 7,6 Gew.-% |
| SiO₂ | 8,0 Gew.-% |
| AIN | 0,9 Gew.-% |
| Fe₂O₃ | 1,9 Gew.-% |
| CaO | 2,5 Gew.-% |
| F | 1,1 Gew.-% |
| Na₂O | 0,8 Gew.-% |
| K₂O | 0,5 Gew.-% |
| Al-Metall | 1,1 Gew.-% |
| Si-Metall | 0,6 Gew.-% |
| Fe-Metall | 0,4 Gew.-% |
| Glühverlust | 7,5 Gew.-% |

Die mineralischen Hauptbestandteile sind Bayerit, Böhmit, Korund und Spinell.

### Beispiel 3

Eine Aluminium-Salzschlacke, enthaltend etwa 40 Gew.-% Salze, etwa 50 Gew.-% Oxide und etwa 10 Gew.-% Al-Metall und Al-Nitrid wird
a) mittels Backenbrecher und Prallmühle auf eine Körnung unter 25 mm vorzerkleinert und anschließend in einer kontinuierlich betriebenen, mit Wasser und Eisenkugeln gefüllten Trommelmühle bei einem Feststoffgehalt von 40 Gew.-%, auf eine Teilchengröße von 100 Gew.-% kleiner 500 µm, bei einem mittleren Teilchendurchmesser (d50) von 10 µm, gemahlen,
b) die Mahlsuspension wird in einem Rührreaktor konditioniert bei einer Temperatur von 50 °C, einem pH-Wert von 10 und einer Verweilzeit von 30 min,
c) die konditionierte Suspension wird mittels eines Vakuumbandfilters filtriert, wobei der Filterkuchen durch Spülen und Aufsprühen von Wasser gewaschen wird, unter Zugabe von NaOH der pH-Wert bei 9,5 gehalten wird, und am Ende der Filtration Luft durch den Filterkuchen gesaugt wird, wodurch ein Filterkuchen mit einem Feuchtegehalt von 40 Gew.-% gebildet wird,
d) und schließlich der so behandelte Filterkuchen in einem Trommeltrockner bei einer Guttemperatur von 100 °C auf eine Restfeuchte von 2 Gew.-% getrocknet wird.

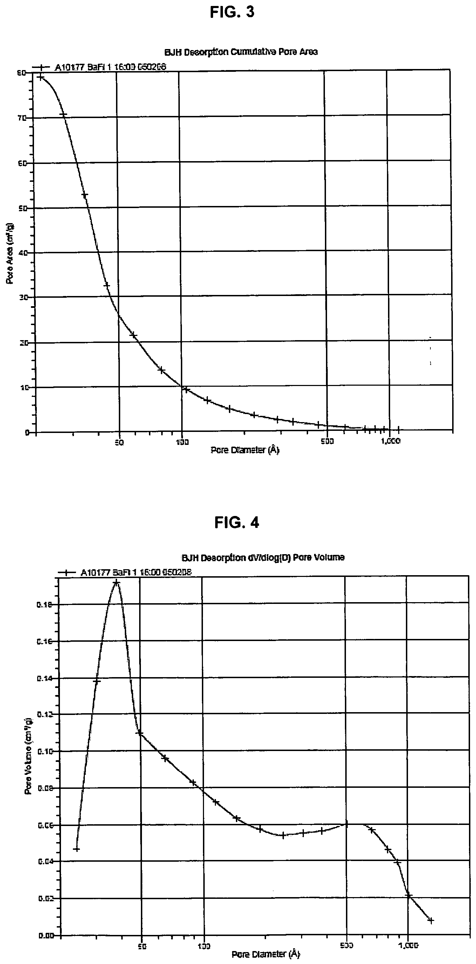

Die spezifische Oberfläche des hochtonerdehaltigen Rohstoffs beträgt, gemessen nach der BET-Methode: 59 m²/g (nach der Langmuir-Methode: 81 m²/g). Der mittlere Porendurchmesser nach BET liegt bei 80 A. Das Porenvolumen hat ein Häufigkeitsmaximum bei einem Porendurchmesser im Bereich von 30 bis 50 A (siehe Fig. 3 - 4). Die Einstreumenge in 100 ml Wasser ist 208 g.

Die chemische Analyse (bezogen auf getrocknete Substanz) ergibt:

| | |
|---|---|
| Al₂O₃ | 69 Gew.-% |
| MgO | 7,2 Gew.-% |
| SiO₂ | 7,6 Gew.-% |
| AIN | 1,2 Gew.-% |
| Fe₂O | 1,6 Gew.-% |
| CaO | 2,1 Gew.-% |
| F | 0,6 Gew.-% |
| Na₂O | 1,0 Gew.-% |
| K₂O | 0,6 Gew.-% |
| Al-Metall | 1,7 Gew.-% |
| Si-Metall | 1,0 Gew.-% |
| Fe-Metall | 0,3 Gew.-% |
| Glühverlust 800 °C | 5,7 Gew.-% |

Die mineralischen Hauptbestandteile sind Bayerit, Böhmit, Korund und Spinell.

### Beispiel 4

Zur Prüfung der Verwendbarkeit in Verbindung mit alkali-aktivierten Bindemitteln wurden Mörtelmischungen hergestellt und daraus Mörtelprismen abgeformt, an denen die Druckfestigkeit nach 2 Tagen bestimmt wurde. Die Mörtelmischungen hatten folgende Zusammensetzung:
a) 15 Gew.-% hochtonerdehaltiger Rohstoff (gemäß den Beispielen 1, 2 und 3),
b) 15 Gew.-% Portlandzement,
c) 70 Gew.-% Normensand,
d) Zusatz von 0,4 % Natriumcarbonat und
e) Zugabe der nötigen Wassermenge für eine verarbeitungsfähige Konsistenz.

Nach 2 Tagen ergaben sich folgende Druckfestigkeiten:

| Rohstoff aus Beispiel | Spezifische Oberfläche m²/g | Druckfestigkeit MPa |
|---|---|---|
| 1 | 27 | 4 |
| 2 | 103 | 16 |
| 3 | 59 | 9 |

Es zeigt sich, dass eine gemäß dem beschriebenen Verfahren erzeugte, vergrößerte spezifische Oberfläche des hochtonerdehaltigen Rohstoffs eine Alkali-Aktivierung ermöglicht und dadurch die mechanische Festigkeit des alkali-aktivierten Mörtels wesentlich gesteigert wird.

### Beispiel 5

Zur Prüfung der Verwendbarkeit in zementgebundenem Beton wurden zementgebundene Steine hergestellt, wie sie typischerweise als Rohstoffbriketts für die Herstellung von Mineralwolle verwendet werden, und bei denen der hochtonerdehaltige Rohstoff die Funktion eines Al₂O₃-Trägers hat. Die Brikett-Mischungen hatten folgende Zusammensetzungen:
a) 15 Gew.-% hochtonerdehaltiger Rohstoff (gemäß den Beispielen 2 bzw. 3),
b) 15 Gew.-% Portlandzement,
c) 70 Gew.-% Rohstoffmischung (enthaltend Konverter- und Kupolofenschlacke, Flugasche, Fasermehl,)
d) ohne und mit Zusatz von 1,0 Gew.-% Aluminiumsulfat bezogen auf a)
e) Zugabe der nötigen Wassermenge für eine verarbeitungsfähige Konsistenz.

Nach einer Mischdauer von 5 Minuten wurden Briketts mit ca. 10 cm Durchmesser und ca. 10 cm Höhe auf einer Pflastersteinpresse abgeformt, und anschließend bei Raumtemperatur und normaler Luftfeuchte gelagert.

In Abhängigkeit von der Lagerzeit (2 Tag, 3 Tage, 5 Tage) ergaben sich folgende Druckfestigkeiten:

| Rohstoff aus Beispiel | Spezifische Oberfläche m²/g | Druckfestigkeit [N/mm2] | | | |
|---|---|---|---|---|---|
| | | 2d | 3d | 5d | Al-sulfat [% vom hochtonerdehaltigen Rohstoff] |
| 2 | 103 | 7,0 | 8,6 | 10,2 | 1 |
| 2 | 103 | 2,5 | 3,2 | 7,1 | 0 |
| | | | | | |
| 3 | 59 | 2,7 | 3,7 | 6,1 | 1 |
| 3 | 59 | 2,1 | 2,9 | 4,0 | 0 |

Es zeigt sich, dass eine Erhärtungsbeschleunigung mittels Aluminiumsulfat generell eintritt und bei einer größeren spezifischen Oberfläche des hochtonerdehaltigen Rohstoffs wesentlich früher und stärker erfolgt.

## Patentansprüche

1. Hochtonerdehaltiger Rohstoff, enthaltend (bezogen auf Trockensubstanz)
| | |
|---|---|
| Al₂O₃ | 50 - 90 Gew.-% |
| MgO | 1 - 20 Gew.-% |
| SiO₂ | 0,5 - 15 Gew.-% |
| AIN | 0,1 - 15 Gew.-% |
| Fe₂O₃ | 0,1 - 5 Gew.-% |
| CaO | 0,1-7 Gew.-% |
| F | 0,1 - 10 Gew.-% |
| Na₂O | 0,1 - 6 Gew.-% |
| K₂O | 0,1 - 2 Gew.-% |
| Al-Metall | 0,1 - 10 Gew.-% |
| Si-Metall | 0,1-3 Gew.-% |
| Fe-Metall | 0,1-3 Gew.-% |
| Glühverlust | 0,1 - 15 Gew.-% |
| Rest | max. 5 Gew.-% |
mit den mineralischen Hauptbestandteilen
- Bayerit (Al₂O₃ 3H₂O) und Böhmit (Al₂O₃·H₂0)
- Korund (Al₂O₃)
- Spinell (MgO. Al₂O₃)
einer Feuchte von max. 10 Gew,-% und einer Teilchengröße von mindestens 90 Gew.-% kleiner 500 µm, **dadurch gekennzeichnet, dass** die spezifische Oberfläche mehr als 50 m²/g beträgt, und der mittlere Porendurchmesser bei weniger als 100 A liegt.

2. Hochtonerdehaltiger Rohstoff nach Anspruch 1, **dadurch gekennzeichnet, dass** die spezifische Oberfläche 50 bis 150 m²/g beträgt, mit einem mittleren Porendurchmesser im Bereich von 50 bis 100 A.

3. Hochtonerdehaltiger Rohstoff nach einem der vorhergehenden Ansprüche, **dadurch gekennzeichnet, dass** das Porenvolumen ein Häufigkeitsmaximum bei einem Porendurchmesser im Bereich von 30 bis 50 Å hat.

4. Hochtonerdehaltiger Rohstoff nach einem der vorhergehenden Ansprüche, **dadurch gekennzeichnet, dass** die Menge an Rohstoff, die beim Einstreuen in 100 ml Wasser durchfeuchtet wird, maximal 220 g beträgt.

5. Hochtonerdehaltiger Rohstoff nach einem der vorhergehenden Ansprüche, **dadurch gekennzeichnet, dass** die spezifische Oberfläche mindestens 80 m²/g beträgt, und die Menge an Rohstoff, die beim Einstreuen in 100 ml Wasser durchfeuchtet wird, maximal 160 g beträgt.

6. Verfahren zur Herstellung eines hochtonerdehaltigen Rohstoffs nach Anspruch 1, **dadurch gekennzeichnet, dass**
a) eine Aluminium-Salzschlacke, enthaltend 20-60 Gew.% Salze aus der Gruppe NaCl, KCl, CaF₂, 35-75 Gew.% Oxide aus der Gruppe Al₂O₃, MgO, SiO₂ und jeweils bis zu 15 Gew.% Aluminiummetall und Aluminiumnitrid trocken vorzerkleinert und anschließend unter Zugabe von Wasser bei einem Feststoffgehalt von 25-55 Gew.% auf eine Teilchengröße von mindestens 90 Gew.% < 500 µm bei einem mittleren Teilchendurchmesser d50 von < 50 µm zu einer Mahlsuspension gemahlen wird,
b) die Mahlsuspension zum möglichst vollständigen Lösen der Salzbestandteile und zur Bildung von Aluminiumhydroxid (aus der Reaktion von Al-Metall und Al-Nitrid mit Wasser, unter Freisetzung von gasförmigem Wasserstoff und Ammoniak und Bildung einer ammoniakalischen Salzsole) in einem Rührreaktor konditioniert wird bei einem pH-Wert zwischen 9 und 12, einer Temperatur zwischen 30 und 90°C und einer Verweilzeit zwischen 10 und 60 min,
c) die konditionierte Suspension zum Abtrennen der ungelösten Bestandteile von der Salzsole filtriert wird, wobei zunächst der Filterkuchen durch Spülen und Aufsprühen von Wasser möglichst salzfrei gewaschen und am Ende der Filtration Luft durch den Filterkuchen gesaugt wird, wodurch der Feuchtegehalt des Filterkuchens auf 30 bis 50 Gew.-% reduziert wird,
d) und schließlich der Filterkuchen bei einer Guttemperatur von 70 bis maximal 110°C auf eine Restfeuchte von bevorzugt kleiner 10 Gew.-% getrocknet wird.

7. Verfahren zur Herstellung eines hochtonerdehaltigen Rohstoffs nach Anspruch 6, **dadurch gekennzeichnet, dass**
c) die konditionierte Suspension zum Abtrennen der ungelösten Bestandteile von der Salzsole mittels eines geeigneten Filters filtriert wird, wobei der Filterkuchen durch Spülen und Aufsprühen von Wasser möglichst salzfrei gewaschen wird, bis der pH-Wert des Kuchens auf 8 bis 9 gesenkt ist, und am Ende der Filtration Luft durch den Filterkuchen gesaugt wird, wodurch der Feuchtegehalt des Filterkuchens auf 30 bis 50 Gew.-% reduziert wird.

8. Verfahren zur Herstellung eines hochtonerdehaltigen Rohstoffs nach Anspruch 6, **dadurch gekennzeichnet, dass**
c) die konditionierte Suspension zum Abtrennen der ungelösten Bestandteile von der Salzsole mittels eines geeigneten Filters filtriert wird, wobei zunächst der Filterkuchen durch Spülen und Aufsprühen von Wasser möglichst salzfrei gewaschen wird, der pH-Wert des Filterkuchens mittels Zugabe von Ammoniak, Natronlauge oder Branntkalk bei größer 9 gehalten wird, und am Ende der Filtration Luft durch den Filterkuchen gesaugt wird, wodurch der Feuchtegehalt des Filterkuchens auf 30 bis 50 Gew.-% reduziert wird.

9. Verfahren nach Anspruch 6, **dadurch gekennzeichnet, dass** die Vorzerkleinerung mit einem Backenbrecher oder einer Prallmühle erfolgt.

10. Verfahren nach einem der Ansprüche 6-9, **dadurch gekennzeichnet, dass** als Mahlaggregat für die Mahlung unter Zugabe von Wasser eine Trommelmühle mit Eisenkugeln verwendet wird.

11. Verfahren nach einem der Ansprüche 6-10, **dadurch gekennzeichnet, dass** das Abtrennen der ungelösten Bestandteile aus der konditionierten Suspension mit einem Vakuum-Bandfilter erfolgt.

12. Verfahren nach einem der vorhergehenden Ansprüche 6 -11, **dadurch gekennzeichnet, dass** die Trocknung in einem Trommeltrockner durchgeführt wird.

## Claims

1. High-alumina raw material, comprising (relative to the dry substance)
| | |
|---|---|
| Al₂O₃ | 50 - 90 wt% |
| MgO | 1 - 20 wt% |
| SiO₂ | 0.5 - 15 wt% |
| AlN | 0.1 - 15 wt% |
| Fe₂O₃ | 0.1 - 5 wt% |
| CaO | 0.1 - 7 wt% |
| F | 0.1 - 10 wt% |
| Na₂O | 0.1 - 6 wt% |
| K₂O | 0.1 - 2 wt% |
| Al metal | 0.1 - 10 wt% |
| Si metal | 0.1 - 3 wt% |
| Fe metal | 0.1 - 3 wt% |
| ignition loss | 0.1 - 15 wt% |
| remaining materials | max. 5 wt%, |
with the main mineral constituents
- bayerite (Al₂O₃·3H₂O) and boehmite (Al₂O₃·H₂O)
- corundum (Al₂O₃)
- spinel (MgO·Al₂O₃)
and with a moisture content of max. 10 wt% and a particle size of at least 90 wt% below 500 *µ*m, **characterized in that** the specific surface area is greater than 50 m²/g and that the mean pore diameter is below 100 A.

2. High-alumina raw material according to claim 1, **characterised in that** the specific surface area is 50 to 150 m²/g, with a mean pore diameter in the range from 50 to 100 Å.

3. High-alumina raw material according to any one of the preceding claims, **characterised in that** the pore volume has a frequency maximum at a pore diameter in the range from 30 to 50 Å.

4. High-alumina raw material according to any one of the preceding claims, **characterised in that** the amount of raw material that becomes thoroughly moistened when strewing said raw material into 100 ml of water is max. 220 g.

5. High-alumina raw material according to any one of the preceding claims, **characterised in that** the specific surface area is at least 80 m²/g and that the amount of raw material that becomes thoroughly moistened when strewing said raw material into 100 ml of water is max. 160 g.

6. Method of producing a high-alumina raw material according to claim 1, **characterised in that**
a) an aluminium salt slag, containing 20 - 60 wt% of salts from the group consisting of NaCl, KCl, CaF₂, 35 - 75 wt% of oxides from the group consisting of Al₂O₃, MgO or SiO₂, and up to 15 wt% each of aluminium metal and aluminium nitride, is precrushed in dry condition and is subsequently, under addition of water, ground at a solids content of 25 - 55 wt% to give a ground material suspension having a particle size of at least 90 wt% <500 *µ*m with a mean particle diameter d50 of <50 *µ*m;
b) to dissolve the salt constituents as completely as possible and to form aluminium hydroxide (from the reaction of Al metal and Al nitride with water, with liberation of gaseous hydrogen and ammonia, and formation of an ammoniacal salt brine), the ground material suspension is conditioned in a stirred tank reactor at a pH between 9 and 12, a temperature between 30 and 90 °C and a dwell time between 10 and 60 min;
c) to separate the undissolved constituents from the salt brine, the conditioned suspension is filtered, the filter cake first being washed by rinsing and spraying it with water to render it as free of salt as possible, and air being sucked through the filter cake at the end of the filtration, thereby reducing the moisture content of the filter cake to 30 to 50 wt%;
d) and that, finally, the filter cake is dried at a temperature of the material of from 70 to max. 110 °C to a residual moisture of below 10 wt%.

7. Method of producing a high-alumina raw material according to claim 6, **characterised in that**
c) to separate the undissolved constituents from the salt brine, the conditioned suspension is filtered with a suitable filter, the filter cake being washed by rinsing and spraying it with water to render it as free of salt as possible, until the pH of the cake is reduced to 8 to 9, and air being sucked through the filter cake at the end of the filtration, thereby reducing the moisture content of the filter cake to 30 to 50 wt%.

8. Method of producing a high-alumina raw material according to claim 6, **characterised in that**
c) to separate the undissolved constituents from the salt brine, the conditioned suspension is filtered with a suitable filter, the filter cake first being washed by rinsing and spraying it with water to render it as free of salt as possible, the pH of the filter cake being maintained above 9 by adding ammonia, sodium hydroxide solution or burnt lime, and air being sucked through the filter cake at the end of the filtration, thereby reducing the moisture content of the filter cake to 30 to 50 wt%.

9. Method according to claim 6, **characterised in that** the precrushing is performed with a jaw crusher or an impact crusher.

10. Method according to any one of claims 6 to 9, **characterised in that** for the grinding operation with addition of water, a rotary drum grinder fitted with iron balls is used as the grinding unit.

11. Method according to any one of claims 6 to 10, **characterised in that** the undissolved constituents are separated from the conditioned suspension by means of a vacuum band filter.

12. Method according to any one of claims 6 to 11, **characterised in that** the drying is performed in a drum-type drier.

## Revendications

1. Matière première à haute teneur en alumine, contenant (par rapport à la substance sèche)
| | |
|---|---|
| Al₂O₃ | 50-90% en poids |
| MgO | 1-20% en poids |
| SiO₂ | 0,5-15% en poids |
| AIN | 0,1-15% en poids |
| Fe₂O₃ | 0,1-5% en poids |
| CaO | 0,1-7% en poids |
| F | 0,1-10% en poids |
| Na₂O | 0,1-6% en poids |
| K₂O | 0,1-2% en poids |
| Al métallique | 0,1-10% en poids |
| Si métallique | 0,1-3% en poids |
| Fe métallique | 0,1-3% en poids |
| Perte à la calcination | 0,1-15% en poids |
| Reste | max. 5% en poids |
présentant les constituants minéraux principaux
- bayérite (Al₂O₃ * 3H₂O) et boehmite (Al₂O₃ * H₂O)
- corindon (Al₂O₃)
- spinelle (MgO * Al₂O₃)
une humidité de maximum 10% en poids et une grosseur de particule d'au moins 90% en poids inférieure à 500 µm, **caractérisée en ce que** la surface spécifique est supérieure à 50 m²/g et le diamètre moyen des pores est inférieur à 100 A.

2. Matière première à haute teneur en alumine selon la revendication 1, **caractérisée en ce que** la surface spécifique est de 50 à 150 m²/g, à un diamètre moyen des pores dans la plage de 50 à 100 A.

3. Matière première à haute teneur en alumine selon l'une quelconque des revendications précédentes, **caractérisée en ce que** le volume des pores présente un maximum de fréquence à un diamètre des pores dans la plage de 30 à 50 A.

4. Matière première à haute teneur en alumine selon l'une quelconque des revendications précédentes, **caractérisée en ce que** la quantité de matière première qui est humidifiée lorsqu'elle est saupoudrée dans 100 ml d'eau est d'au maximum 220 g.

5. Matière première à haute teneur en alumine selon l'une quelconque des revendications précédentes, **caractérisée en ce que** la surface spécifique est d'au moins 80 m²/g et la quantité de matière première qui est humidifiée lorsqu'elle est saupoudrée dans 100 ml d'eau est d'au maximum 160 g.

6. Procédé pour la préparation d'une matière première à haute teneur en alumine selon la revendication 1, **caractérisé en ce que**
a) une scorie de sel d'aluminium, contenant 20-60% en poids de sels du groupe formé par NaCl, KCI, CaF₂, 35-75% en poids d'oxydes du groupe formé par Al₂O₃, MgO, SiO₂ et jusqu'à 15% en poids respectivement d'aluminium métallique et de nitrure d'aluminium, est broyée au préalable à sec et ensuite broyée, avec addition d'eau à une teneur en solides de 25-55% en poids, à une grosseur de particule d'au moins 90% en poids < 500 µm à un diamètre moyen de particule d₅₀ < 50 µm en une suspension broyée,
b) la suspension broyée est conditionnée en vue de la dissolution la plus complète possible des constituants de sel et de la formation d'hydroxyde d'aluminium (à partir de la réaction d'Al métallique et de nitrure d'Al avec de l'eau, avec libération d'hydrogène gazeux et d'ammoniac gazeux et formation d'un sol de sel ammoniacal) dans un réacteur agité à un pH entre 9 et 12, à une température entre 30 et 90°C et à un temps de séjour entre 10 et 60 minutes,
c) la suspension conditionnée est filtrée pour la séparation des constituants non dissous du sol de sel, le gâteau de filtre étant d'abord lavé jusqu'à la plus grande absence de sel possible par rinçage et pulvérisation d'eau et de l'air étant aspiré à travers le gâteau de filtre à la fin de la filtration, suite à quoi la teneur en humidité du gâteau de filtre est réduite à 30 jusqu'à 50% en poids,
d) et enfin, le gâteau de filtre est séché à une température du produit de 70 à au maximum 110°C à une humidité résiduelle de préférence inférieure à 10% en poids.

7. Procédé pour la préparation d'une matière première à haute teneur en alumine selon la revendication 6, **caractérisé en ce que**
c) la suspension conditionnée est filtrée au moyen d'un filtre approprié pour la séparation des constituants non dissous du sol de sel, le gâteau de filtre étant lavé jusqu'à la plus grande absence de sel possible par rinçage et pulvérisation d'eau jusqu'à ce que le pH du gâteau soit abaissé à 8 jusqu'à 9 et de l'air étant aspiré à travers le gâteau de filtre à la fin de la filtration, suite à quoi la teneur en humidité du gâteau de filtre est réduite à 30 jusqu'à 50% en poids.

8. Procédé pour la préparation d'une matière première à haute teneur en alumine selon la revendication 6, **caractérisé en ce que**
c) la suspension conditionnée est filtrée au moyen d'un filtre approprié pour la séparation des constituants non dissous du sol de sel, le gâteau de filtre étant d'abord lavé jusqu'à la plus grande absence de sel possible par rinçage et pulvérisation d'eau, le pH du gâteau de filtre étant maintenu à plus de 9 par addition d'ammoniac, de lessive de soude caustique ou de chaux calcinée et de l'air étant aspiré à travers le gâteau de filtre à la fin de la filtration, suite à quoi la teneur en humidité du gâteau de filtre est réduite à 30 jusqu'à 50% en poids.

9. Procédé selon la revendication 6, **caractérisé en ce que** le broyage préalable à lieu à l'aide d'un concasseur à mâchoires ou d'un broyeur à percussion.

10. Procédé selon l'une quelconque des revendications 6-9, **caractérisé en ce qu'**on utilise un broyeur rotatif contenant des billes en fer comme appareil de broyage pour le broyage avec addition d'eau.

11. Procédé selon l'une quelconque des revendications 6-10, **caractérisé en ce que** la séparation des constituants non dissous de la suspension conditionnée a lieu avec un filtre à bande sous vide.

12. Procédé selon l'une quelconque des revendications précédentes 6-11, **caractérisé en ce que** le séchage est réalisé dans un sécheur rotatif.
